# EUROPÄISCHE PATENTSCHRIFT

(11) **EP 2 740 589 B1**
(45) Veröffentlichungstag und Bekanntmachung des Hinweises auf die Patenterteilung: **25.10.2017**
(21) Anmeldenummer: 12195552.0
(22) Anmeldetag: 04.12.2012
(51) Int. Cl.: B32B 5/16, B32B 5/18, B32B 3/20, B32B 3/26, B62D 21/00

(54) **Verfahren zur Herstellung eines Sandwichbauteils**
Method for producing a sandwich component
Procédé de fabrication d'un élément sandwich

(43) Veröffentlichungstag der Anmeldung: 11.06.2014
(73) Patentinhaber: Magna Steyr Fahrzeugtechnik AG & Co KG, 8041 Graz (AT)
(72) Erfinder: Wolfsberger, Günter, 8501 Lieboch (AT)
(74) Vertreter: Zangger, Bernd

(56) Entgegenhaltungen:
- DE-A1- 3 123 134
- DE-A1- 19 937 375
- GB-A- 2 041 829
- US-A- 5 251 414
- US-A1- 2011 039 073

## Beschreibung

### Gebiet der Erfindung

Die vorliegende Erfindung betrifft ein Verfahren zur Herstellung eines Sandwichbauteils mit einer Kernschicht zwischen einer ersten Deckschicht und einer zweiten Deckschicht.

### Stand der Technik

Derartige Sandwichbauteile finden in verschiedenen Bereichen der Technik Anwendung, beispielsweise im Fahrzeugbau. Die Sandwichbauteile setzen sich aus zwei Deckschichten, als äußere Schichten des Aufbaus und einer Kernschicht zusammen. Für die Kernschicht ist die Verwendung von strukturierten Kernen, wie Wabenkernen, als auch von homogenen Materialien, wie beispielsweise aufgeschäumter Werkstoffe, bekannt. Mit Hilfe derartiger Sandwichbauteile wird versucht Material und Gewicht einzusparen und dennoch eine hohe Belastbarkeit des Bauteils zu erreichen.

Beispielsweise offenbart die EP 1 758 733 A1 Sandwichelemente umfassend mindestens zwei Decklagen und mindestens eine zwischen den Deckschichten angeordnete Mittellage, mit verschiedenen Kernaufbauten. Die DE 10 2011 109 468 A1 offenbart eine Fronthaube für einen Personenkraftwagen, mit einer Struktur aus zwei voneinander beabstandeten Deckschichten, zwischen welchen wenigstens ein Kernelement angeordnet ist.

Aus der US 5 251 414 A ist ein Sandwichbauteil bekannt, mit einer Verstärkungsstruktur umfassend kugelförmige Verstärkungsteile die an verschiedenen Achsen angeordnet sind.

DE 199 37 375 A1 offenbart ein Konstruktionsbauteil mit einer äußeren Hülle und in deren Innenraum angeordneten Versteifungselementen die als Hohlkörper ausgebildet sind. Die Hohlkörper werden in die Hülle geschüttet so dass sie diese ausfüllend aneinander liegen.

Aus der US 2011/039073 A1 ist ein Verbundmaterial bekannt mit zwei verschiedenen übereinanderliegenden Schichten, nämlich einer ersten Schicht, die aus Hohlkugeln gebildet wird, welche dazu bestimmt sind die Oberfläche des Teils zu schützen und einer zweiten Schicht, die die erste Schicht bedeckt.

Die DE 31 23 134 A1 offenbart einen Verbundwerkstoff, bestehend aus zwei metallischen Deckplatten und einem zwischen den Platten befindlichen Zwischenmaterial, wobei das Material der Zwischenschicht aus Mikrohohlglaskugeln besteht. Diese Mikrohohlkugeln werden zusammen mit einem Bindemittel angerührt und zusammen mit den Aluminiumplatten verpresst.

GB 2 041 829 A offenbart ein Verbundmaterial mit einem Kern der Hohlkugeln umfasst. Die Hohlkugeln werden möglichst gleichverteilt in den Kern eingebracht.

### Zusammenfassung der Erfindung

Es ist eine Aufgabe der Erfindung, ein Verfahren zur Herstellung eines Sandwichbauteils der genannten Art zu verbessern und insbesondere ein Verfahren zur Herstellung eines Sandwichbauteils anzugeben, wobei das Sandwichbauteil hinsichtlich Gewicht und Steifigkeit optimiert ist und dessen Eigenschaften einfach anpassbar sind.

Die Lösung der Aufgabe erfolgt durch ein Verfahren zur Herstellung eines Sandwichbauteils mit einer Kernschicht zwischen einer ersten Deckschicht und einer zweiten Deckschicht, wobei in der Kernschicht Hohlkugeln mit einem Durchmesser zwischen 0,5 und 50 mm angeordnet sind, wobei die Hohlkugeln bei der Herstellung der Kernschicht in die Kernschicht eingebracht werden, wobei die Hohlkugeln über mindestens einen Schlauch in die Kernschicht eingeblasen werden.

Erfindungsgemäß sind in die Kernschicht Hohlkugeln enthalten, das heißt zumindest annähernd sphärische Beimengungen, die über eine Schale als äußere Begrenzung verfügen. Die Schale der Hohlkugeln kann aus dem selben Material bestehen, wie die übrige Kernschicht, oder aus einem davon verschiedenen Material. Bevorzugt ist das Material der Schale der Hohlkugeln gut mit dem Material der übrigen Kernschicht verträglich. Im Inneren der Hohlkugel befindet sich ein von der Schale verschiedenes Material, dass vorzugsweise eine geringere Steifigkeit aufweist als die Schale. Bevorzugt ist das Innere der Hohlkugeln mit Luft gefüllt, wodurch die Hohlkugeln besonders einfach hergestellt werden können, es können jedoch beispielsweise auch andere Gase oder Gasgemische verwendet werden, insbesondere solche die leichter sind als Luft. Die Hohlkugeln dienen in erster Linie dazu, Hohlräume in der Kernschicht des Sandwichbauteils zu schaffen. Dadurch können die Eigenschaften des Bauteils gezielt beeinflusst werden, insbesondere können je nach Anzahl, Größe und Materialien der beigefügten Hohlkugeln Abschnitte des Sandwichbauteils mit verschiedener Steifigkeit bereitgestellt werden.

Die Hohlkugeln weisen einen Durchmesser zwischen 0,5 und 50 mm auf, bevorzugt zwischen 2 und 30 mm, besonders bevorzugt zwischen 5 und 20 mm. Hierdurch kann eine relevante Veränderung, beispielsweise Verringerung der Bauteilsteifigkeit erreicht werden. Eine unerwünschte Oberflächenwelligkeit kann dabei vermieden oder gering gehalten werden. Für die Deckschichten können verschiedenste Materialien verwendet werden, beispielsweise Faserverbund, Papier, Karton, Metall oder Kunststoff. Sehr vorteilhaft kann ein derartiges Sandwichbauteil beispielsweise als Frontklappe für ein Kraftfahrzeug verwendet werden, wobei in die Frontklappe nur in einem ersten Abschnitt Hohlkugeln eingebracht sind oder im ersten Abschnitt eine größere Anzahl, größere Durchmesser etc. der Hohlkugeln eingebracht sind. Auf diese Weise kann mit einfachen Mitteln eine Frontklappe mit generell hoher Klappensteifigkeit und abschnittsweise geringerer Steifigkeit beispielsweise in einer Kopfaufprallzone geschaffen werden.

Weiterbildungen der Erfindung sind in den abhängigen Ansprüchen, der Beschreibung sowie den beigefügten Zeichnungen angegeben.

Bevorzugt führt das Verfahren dazu, dass die Hohlkugeln lose in der umgebenden Kernschicht liegen. Da die Holkugeln keine tragende Funktion in der Kernschicht übernehmen müssen, können sie lose in die Kernschicht eingebracht sein und müssen beispielsweise nicht verklebt werden, wodurch eine einfachere Fertigung ermöglicht wird.

Gemäß einer Ausführungsform des Verfahrens liegen die Hohlkugeln geordnet in der umgebenden Kernschicht, sind also in der Kernschicht gezielt ausgerichtet.

Die Kernschicht ist bevorzugt als Schaumelement ausgebildet, insbesondere als Polyurethan (PU). Vorteilhaft können alle Materialien eingesetzt werden, die flüssig expandierend, einspritzbar oder gießbar sind, beispielsweise Polyethylenterephthalat (PET).

Bevorzugt ist die Kernschicht einteilig ausgebildet, so dass die Kernschicht, eventuell mit Ausnahme der Hohlkugeln, aus dem selben Material gebildet ist.

In einer anderen Ausgestaltung der Erfindung wird die Kernschicht aus unterschiedlichen Materialien zusammengesetzt. Dadurch sind die Eigenschaften der Kernschicht und des ganzen Bauteils individuell an die Erfordernisse anpassbar.

Gemäß einer Ausgestaltung der Erfindung werden in der Kernschicht Füllmaterialien, wie beispielsweise Fasern, mit vom umgebenden Material der Kernschicht verschiedenen physikalischen und/oder chemischen Eigenschaften angeordnet.

Es kann vorzugsweise zumindest ein erster Abschnitt eines Karosserieteils eines Kraftfahrzeugs durch einen erfindungsgemäßen Sandwichbauteil gebildet sein. Das Karosserieteil kann beispielsweise eine Frontklappe, eine Heckklappe, ein Dach, ein Karosserieboden, ein Ladeboden oder ein Torsionskasten sein.

Besonders bevorzugt ist auch ein zweiter Abschnitt des Karosserieteils durch einen nach dem erfindungsgemäßen Verfahren hergestellten Sandwichbauteil gebildet, wobei die Kernschicht des ersten Abschnitts des Karosserieteils eine von der Kernschicht des zweiten Abschnitts des Karosserieteils verschiedene Verteilung von Hohlkugeln aufweist, insbesondere einen unterschiedlichen durchschnittlichen Durchmesser der Hohlkugeln und/oder eine unterschiedliche Anzahldichte der Hohlkugeln. Hierdurch ist es möglich unterschiedliche Zonen des Karosserieteils auf einfache Weise mit unterschiedlichen Eigenschaften auszustatten, insbesondere hinsichtlich Steifigkeit, Akustik oder Wärmeabsorption.

Selbstverständlich kann auch ein Abschnitt eines Karosserieteils als konventioneller Sandwichbauteil, also ohne Hohlkugeln ausgeführt sein und ein zweiter Abschnitt des Karosserieteils erfindungsgemäß mit Hohlkugeln ausgeführt werden. Das Verfahren zur Herstellung eines erfindungsgemäßen Sandwichbauteils sieht vor, dass Hohlkugeln bei der Herstellung der Kernschicht in die Kernschicht eingeblasen werden. Je nach den Anforderungen an das Bauteil oder den bearbeiteten Abschnitt des Bauteils können unterschiedliche Hohlkugeln oder unterschiedliche Mengen an Hohlkugeln eingebracht werden.

Erfindungsgemäß können die Hohlkugeln mit einem Schlauch eingeblasen werden, wobei die Hohlkugeln hierbei gleiche oder unterschiedliche Durchmesser aufweisen können.

Bevorzugt werden die Hohlkugeln über mindestens zwei Schläuche in die Kernschicht eingeblasen, wobei die mindestens zwei Schläuche unterschiedliche Durchmesser aufweisen. Die unterschiedlich breiten Schläuche sind für Hohlkugeln unterschiedlicher Durchmesser vorgesehen. Auf diese Weise können beispielsweise gleichzeitig Hohlkugeln unterschiedlicher Durchmesser einer Kernschicht eines Sandwichbauteils beigefügt werden.

Bevorzugt werden die Hohlkugeln über mindestens zwei Schläuche in die Kernschicht eingeblasen, wobei die mindestens zwei Schläuche unterschiedliche Durchmesser aufweisen. Die unterschiedlich breiten Schläuche sind für Hohlkugeln unterschiedlicher Durchmesser vorgesehen. Auf diese Weise können beispielsweise gleichzeitig Hohlkugeln unterschiedlicher Durchmesser einer Kernschicht eines Sandwichbauteils beigefügt werden.

Gemäß einer Ausgestaltung der Erfindung werden die Hohlkugeln bei der Herstellung der Kernschicht in ein Gitter oder eine Hohlraumstruktur eingebracht.

Die Hohlkugeln können in vorgefertigten Vertiefungen der Deckschichten und/oder der Kernschicht eingelegt und/oder fixiert werden. Dazu können beispielsweise dreidimensionale PU-Gitter, die der Form der Kernschicht angepasst sind, verwendet werden, um in deren Raster die Hohlkugeln aufzunehmen und damit zu positionieren und/oder zu fixieren und so die Hohlkugeln in der Kernschicht zu ordnen.

Zur Ordnung der Hohlkugeln kann auch ein einseitig (zum Beispiel in Einbaurichtung oben) geschlossener Bauteil, beispielsweise ebenfalls aus PU, verwendet werden, der senkrecht dazu eine Röhren- oder Wabenform aufweist, und so durch die Stege geschaffene zur zweiten Seite hin offene Hohlräume ausbildet. Nun können von der offenen Seite her, mittels eines oder mehrerer Schläuche, Hohlkugeln, welche beispielsweise mit einem Gas, welches leichter als Luft ist, gefüllt sind, in die Öffnungen geblasen Gemäß einer Ausgestaltung der Erfindung werden die Hohlkugeln bei der Herstellung der Kernschicht in ein Gitter oder eine Hohlraumstruktur eingebracht.

Die Hohlkugeln können in vorgefertigten Vertiefungen der Deckschichten und/oder der Kernschicht eingelegt und/oder fixiert werden. Dazu können beispielsweise dreidimensionale PU-Gitter, die der Form der Kernschicht angepasst sind, verwendet werden, um in deren Raster die Hohlkugeln aufzunehmen und damit zu positionieren und/oder zu fixieren und so die Hohlkugeln in der Kernschicht zu ordnen.

Zur Ordnung der Hohlkugeln kann auch ein einseitig (zum Beispiel in Einbaurichtung oben) geschlossener Bauteil, beispielsweise ebenfalls aus PU, verwendet werden, der senkrecht dazu eine Röhren- oder Wabenform aufweist, und so durch die Stege geschaffene zur zweiten Seite hin offene Hohlräume ausbildet. Nun können von der offenen Seite her, mittels eines oder mehrerer Schläuche, Hohlkugeln, welche beispielsweise mit einem Gas, welches leichter als Luft ist, gefüllt sind, in die Öffnungen geblasen werden. Anschließend werden diese Strukturen mit einem Kernschichtmaterial überflutet und danach das Bauteil, zum Beispiel in einem beheizten Werkzeug, ausgehärtet.

### Beschreibung der Zeichnungen

Die Erfindung wird im Folgenden beispielhaft unter Bezugnahme auf die Zeichnung beschrieben.
- Fig. 1: ist eine Schnittansicht eines erfindungsgemäß hergestellten Sandwichbauteils.
- Fig. 2: ist eine schematische Darstellung eines Schnitts durch einen weiteren erfindungsgemäß hergestellten Sandwichbauteil in Seitenansicht.

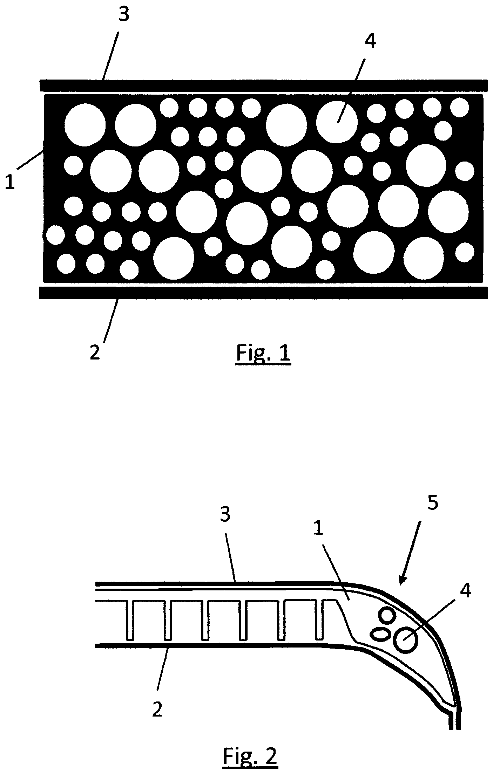

In Fig. 1 ist ein Schnitt durch einen erfindungsgemäß hergestellten Sandwichbauteil dargestellt. In eine Kernschicht 1 aus Polyurethan-Schaum, die zwischen zwei Deckschichten 2 und 3 angeordnet ist, sind luftgefüllte Hohlkugeln 4 mit unterschiedlicher Größe eingebettet. Die Kernschicht 1 kann in einer Press-, Spritz- oder Schäumform ausgehärtet sein, sodass sich die Hohlkugeln 4 durchwegs im Inneren der Kernschicht 1 befinden und die Oberfläche der Kernschicht 1 weitgehend unversehrt und eben bleibt.

Fig. 2 zeigt einen Aufbau eines erfindungsgemäß hergestellten Sandwichbauteils ähnlich Fig. 1, jedoch ist ein größerer Bereich des Bauteils dargestellt und der Bauteil über alle Schichten hinweg an einer Seite gekrümmt ausgeführt. Es kann sich dabei zum Beispiel um einen vorderen Bereich einer Fronthaube eines Kraftfahrzeuges handeln.

Das Sandwichbauteil weist zwei unterschiedliche Abschnitte auf. In einem ersten Abschnitt 5 sind in der Kernschicht 1 des Sandwichbauteils Hohlkugeln 4 unterschiedlicher Größe angeordnet. Weitere Abschnitte der Kernschicht 1 des dargestellten Sandwichbauteils weisen keine Hohlkugeln 4 auf, bilden jedoch beispielsweise andere Strukturen, wie Stege, Zellen, Waben oder dergleichen.

### Bezugszeichenliste

- 1: Kernschicht
- 2: erste Deckschicht
- 3: zweite Deckschicht
- 4: Hohlkugel
- 5: erster Abschnitt

## Patentansprüche

1. Verfahren zur Herstellung eines Sandwichbauteils mit einer Kernschicht (1) zwischen einer ersten Deckschicht (2) und einer zweiten Deckschicht (3), wobei in der Kernschicht (1) Hohlkugeln (4) mit einem Durchmesser zwischen 0,5 und 50 mm angeordnet sind, wobei die Hohlkugeln (4) bei der Herstellung der Kernschicht (1) in die Kernschicht (1) eingebracht werden, **dadurch g e - kennzeichnet,** dass die Hohlkugeln (4) über mindestens einen Schlauch in die Kernschicht (1) eingeblasen werden.

2. Verfahren nach Anspruch 1,
**dadurch gekennzeichnet, dass** die Hohlkugeln (4) mit Luft oder einem Gas leichter als Luft gefüllt sind.

3. Verfahren nach Anspruch 1 oder 2,
**dadurch gekennzeichnet, dass** die Hohlkugeln (4) lose in der umgebenden Kernschicht (1) liegen.

4. Verfahren nach einem der vorhergehenden Ansprüche,
**dadurch gekennzeichnet, dass** die Hohlkugeln (4) geordnet in der umgebenden Kernschicht (1) liegen.

5. Verfahren nach zumindest einem der vorhergehenden Ansprüche, **dadurch gekennzeichnet, dass** die Kernschicht (1) als Schaumelement ausgebildet ist, insbesondere ein Polyurethan ist.

6. Verfahren nach zumindest einem der vorhergehenden Ansprüche, **dadurch gekennzeichnet, dass** die Hohlkugeln (4) über mindestens zwei Schläuche in die Kernschicht (1) eingeblasen werden, wobei die mindestens zwei Schläuche unterschiedliche Durchmesser aufweisen.

7. Verfahren nach zumindest einem der vorhergehenden Ansprüche, **dadurch gekennzeichnet, dass** die Hohlkugeln (4) bei der Herstellung der Kernschicht (1) in ein Gitter oder eine Hohlraumstruktur eingebracht werden.

8. Verfahren nach zumindest einem der vorhergehenden Ansprüche, **dadurch gekennzeichnet, dass** zumindest ein erster Abschnitt (5) des Karosserieteils durch ein Verfahren nach zumindest einem der vorhergehenden Ansprüche gebildet ist und ein zweiter Abschnitt des Karosserieteils durch ein Verfahren nach zumindest einem der vorhergehenden Ansprüche gebildet ist, wobei die Kernschicht (1) des ersten Abschnitts (5) des Karosserieteils eine von der Kernschicht (1) des zweiten Abschnitts des Karosserieteils verschiedene Verteilung von Hohlkugeln (4) aufweist, insbesondere einen unterschiedlichen durchschnittlichen Durchmesser der Hohlkugeln (4) und/oder eine unterschiedliche Anzahldichte der Hohlkugeln (4).

## Claims

1. Method for producing a sandwich component having a core layer (1) between a first cover layer (2) and a second cover layer (3), wherein hollow spheres (4) having a diameter between 0.5 and 50 mm are disposed in the core layer (1), wherein the hollow spheres (4) are incorporated in the core layer (1) in the production of the core layer (1), **characterized in that**
the hollow spheres (1) are blown into the core layer (1) by way of at least one hose.

2. Method according to Claim 1,
**characterized in that**
the hollow spheres (4) are filled with air or with a gas that is lighter than air.

3. Method according to either of Claims 1 and 2, **characterized in that**
the hollow spheres (4) lie loosely in the surrounding core layer (1).

4. Method according to one of the preceding claims, **characterized in that**
the hollow spheres (4) lie in an orderly fashion in the surrounding core layer (1).

5. Method according to at least one of the preceding claims,
**characterized in that**
the core layer (1) is configured as a foam element, said core layer (1) in particular being a polyurethane.

6. Method according to at least one of the preceding claims,
**characterized in that**
the hollow spheres (4) are blown into the core layer (1) by way of at least two hoses, wherein the at least two hoses have dissimilar diameters.

7. Method according to at least one of the preceding claims,
**characterized in that**
the hollow spheres (1) in the production of the core layer (1) are incorporated in a mesh or a cavity structure.

8. Method according to at least one of the preceding claims,
**characterized in that**
at least one first portion (5) of the body part is formed by a method according to at least one of the preceding claims, and a second portion of the body part is formed by a method according to at least one of the preceding claims, wherein the core layer (1) of the first portion (5) of the body part has a distribution of hollow spheres (4) that differs from that of the core layer (1) of the second portion of the body part, in particular has a dissimilar average diameter of the hollow spheres (4) and/or a dissimilar density count of the hollow spheres (4).

## Revendications

1. Procédé de fabrication d'un élément sandwich avec une couche d'âme (1) entre une première couche de recouvrement (2) et une deuxième couche de recouvrement (3), dans lequel des billes creuses (4) d'un diamètre compris entre 0,5 et 50 mm sont disposées dans la couche d'âme (1), dans lequel on introduit les billes creuses (4) dans la couche d'âme (1) lors de la fabrication de la couche d'âme (1), **caractérisé en ce que** l'on insuffle les billes creuses (4) dans la couche d'âme (1) au moyen d'au moins un tuyau flexible.

2. Procédé selon la revendication 1, **caractérisé en ce que** les billes creuses (4) sont remplies d'air ou d'un gaz plus léger que l'air.

3. Procédé selon la revendication 1 ou 2, **caractérisé en ce que** les billes creuses (4) gisent librement dans la couche d'âme environnante (1).

4. Procédé selon l'une quelconque des revendications précédentes, **caractérisé en ce que** les billes creuses (4) sont rangées dans la couche d'âme environnante (1).

5. Procédé selon au moins une des revendications précédentes, **caractérisé en ce que** la couche d'âme (1) est formée par un élément de mousse, en particulier est un polyuréthane.

6. Procédé selon au moins une des revendications précédentes, **caractérisé en ce que** les billes creuses (4) sont insufflées dans la couche d'âme (1) au moyen d'au moins deux tuyaux flexibles, dans lequel lesdits au moins deux tuyaux flexibles présentent des diamètres différents.

7. Procédé selon au moins une des revendications précédentes, **caractérisé en ce que** les billes creuses (4) sont introduites dans une grille ou une structure de cavités lors de la fabrication de la couche d'âme (1).

8. Procédé selon au moins une des revendications précédentes, **caractérisé en ce qu'**au moins une première partie (5) de la pièce de carrosserie est formée par un procédé selon au moins une des revendications précédentes et une deuxième partie de la pièce de carrosserie est formée par un procédé selon au moins une des revendications précédentes, dans lequel la couche d'âme (1) de la première partie (5) de la pièce de carrosserie présente une distribution de billes creuses (4) différente de la couche d'âme (1) de la deuxième partie de la pièce de carrosserie, en particulier un diamètre moyen des billes creuses (4) différent et/ou une densité numérique des billes creuses (4) différente.
